Europäisches Patentamt

European Patent Office

Office européen des brevets

(11) Publication number: **0 354 797**
**A2**

## EUROPEAN PATENT APPLICATION

(21) Application number: **89308163.8**

(22) Date of filing: **10.08.89**

(51) Int. Cl.5: **B 01 D 19/00**

(30) Priority: **12.08.88 JP 201759/88**

(43) Date of publication of application:
**14.02.90 Bulletin 90/07**

(84) Designated Contracting States:
**AT BE CH DE ES FR GB GR IT LI LU NL SE**

(71) Applicant: **JAPAN GORE-TEX, INC.**
**42-5, 1-chome Akazutsumi**
**Setagaya-ku Tokyo 156 (JP)**

(72) Inventor: **Shibata, Yoshihiko c/o Japan Gore-Tex, Inc.**
**Okayama Plant 123 Minamigata Yoshinaga-cho**
**Wake-gun Okayama-ken (JP)**

**Chikamori, Yoshihiro c/o Japan Gore-Tex, Inc.**
**Okayama Plant 123 Minamigata Yoshinaga-cho**
**Wake-gun Okayama-ken (JP)**

**Shimizu, Yoichi c/o Japan Gore-Tex, Inc.**
**Okayama Plant 123 Minamigata Yoshinaga-cho**
**Wake-gun Okayama-ken (JP)**

(74) Representative: **Knott, Stephen Gilbert et al**
**MATHISEN, MACARA & CO. The Coach House 6-8**
**Swakeleys Road**
**Ickenham Uxbridge Middlesex UB10 8BZ (GB)**

(54) **Degassing device.**

(57) A degassing device comprises a liquid impermeable gas-permeable film material (1) and spacers (2) which are disposed alternately in spiral coils inside a housing (8). The spacer (2) on one side of the film material (1) defines a space (3a) for use as a liquid flow path, while the spacer (2) on the other side of the film material (1) defines a space (3) forming a passage for removed gas.

Fig.1.

EP 0 354 797 A2

## Description

## DEGASSING DEVICE

The present invention relates to a device for the separation and removal of gas from gas-containing liquids. Such a device may be used, for example, for (a) preventing rusting or corrosion of pipework caused by solute gases in heating and hot water supply systems in buildings, etc., (b) preventing oxidation of liquid foodstuffs or pure water (used in the food industry) caused by solute oxygen, and (c) removing undesirable solute gases from pure water used in semiconductor manufacture, etc.

Since the deleterious effects of gaseous components contained in liquids can be eliminated by removing the gas from said liquids, so that the characteristics of said liquids are improved, there have been many proposals concerning methods of separating gaseous components from liquids. In the past, such methods have generally used degassing columns, although more recently, methods using degassing membranes have also been proposed. A few examples of such methods are disclosed in Japanese Laid-Open Utility Model Applications Nos. 53-31040 and 61-83401, and Japanese Laid-Open Patent Applications Nos. 57-165007; 60-25514; 55-121806; 58-62137 and 62-42708. These methods achieve gas separation by using a membrane which is permeable only to gases in an arrangement in which the membrane is installed in all or part of a liquid flow path.

Degassing columns suffer from the drawback that a large apparatus with a height of 3 to 4 metres is required even in cases where the amount of liquid to be treated is relatively small. In cases where this amount of space is not available, a batch type system must be used. In the case of methods using gas-permeable membranes, the apparatus used can be made more compact than is possible in the case of conventional degassing column methods, but efficient separation is still not achieved.

In order to achieve efficient gas separation, it is necessary to use a tube which has a large liquid interface area. For example, the liquid may be passed through the interior of the tube, and the gaseous components removed from the outside of the tube under reduced pressure. Conversely, it is also possible to reduce the pressure inside the tube and to cause the gas-containing liquid to pass along the outside surface of the tube, so that the gaseous components are separated into the interior of the tube. In either case, the tube must be long and slender or extremely thin in order to obtain a high degassing efficiency. As a result, the pressure loss is large so that it is difficult to pass high-viscosity liquids through the apparatus. Furthermore, the need for pumps increases the size of the apparatus. In addition, there is an increased risk of damage to the tube as a result of the relatively low strength of the tube, and the flow path may be restricted as a result of bending of the tube. In any event, it is extremely difficult to reduce the amount of gas contained in a liquid after treatment to a value below a certain limiting concentration, even if the flow rate of the liquid under treatment is considerably reduced.

In the aforementioned Japanese laid-open patent applications, Nos. 55-121806, 58-62137 and 62-42708, methods are proposed in which portions of the flow path are formed from a gas permeable film, but since the film is used only in portions of the flow path, the efficiency is low. Furthermore, stable installation of the film is difficult in these methods. For these and other reasons, none of these methods has actually been able to produce satisfactory treatment results.

According to the invention, there is provided a degassing device comprising a liquid impermeable gas permeable film material and spacer means which are disposed alternately in spiral coils within a housing, the spacer means on one side of the film material defining a liquid flow path, and the pacer means on the other side of the film material defining a passage for gas removed from the liquid.

The construction of the degassing device in accordance with the invention (a) improves the efficiency of the mechanism used to separate and remove gaseous components from gas-containing liquids, (b) enables effective degassing to be achieved by means of a compact mechanism, and (c) provides a degassing mechanism which allows the appropriate use of a low-cost treatment even in the case of high-viscosity liquids.

Since the liquid-impermeable gas-permeable film material and the spacer means are alternately positioned in spiral coils and set inside the housing, an installation relationship is obtained in which the film material and spacer means are effectively formed into an integral unit, and in which a fixed spacing is maintained. As a result, a gas-separating mechanism is formed which utilizes the entire surface of the film material.

The spacer means is positioned on both sides of the film material (which is a continuously porous film) so that a sandwich-type arrangement is formed. As a result, a liquid flow path is formed on one side of the film material, while a passage for separated gas is formed on the other side of the film material. Because of the spiral-coil installation inside a housing, the film material and spacer means form the desired degassing mechanism using a minimum of unit elements. This facilitates manufacture and assembly, reduces the size of the apparatus, and reduces costs.

In all case, the entire space inside the housing is utilized for the degassing treatment.

An example of the degassing device in accordance with the invention will now be described with reference to the accompanying drawings, in which:

Figure 1 is a perspective view of the device with the lid removed;

Figure 2 is a graph which shows solute oxygen concentrations of tap water measured after degassing using the device of Figure 1 and a conventional device;

Figure 3 is an explanatory sketch diagram illustrating one example of the method of assembly of the film material and spacers used in the device of Figure 1; and

Figure 4 is a perspective view of a part used to form the liquid supply port, the liquid discharge port and the gas discharge ports of the device of Figure 1.

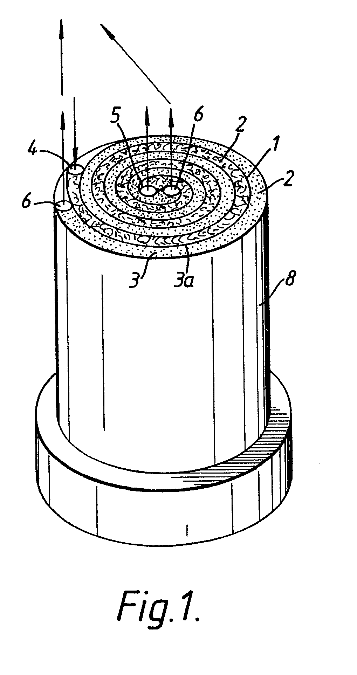

The film material (1) used in the degassing device shown in Figure 1 is a synthetic resin film with a continuously porous structure, and may be a polytetrafluoroethylene film obtained by drawing to a pore size of 2 microns or less and a porosity of approximately 5 to 95%. Such a film is permeable to gases as a result of its porous structure, but at the same time is effectively impermeable to liquids as a result of the fineness of the aforementioned porous structure and the water-repellent nature of the material itself. The gas-permeable liquid-impermeable film material (1) and a netform spacer (2) are mounted together, and the assembly consisting of these two parts (1) and (2) is wound in the form of a spiral coil and installed inside a housing (8) so that a fixed spacing (3,3a) is maintained on opposite sides of the film material (1). A net-like material or non-woven fabric made of polypropylene, polyvinyl chloride or polytetrafluoroethylene, etc. may be used for the spacer (2).

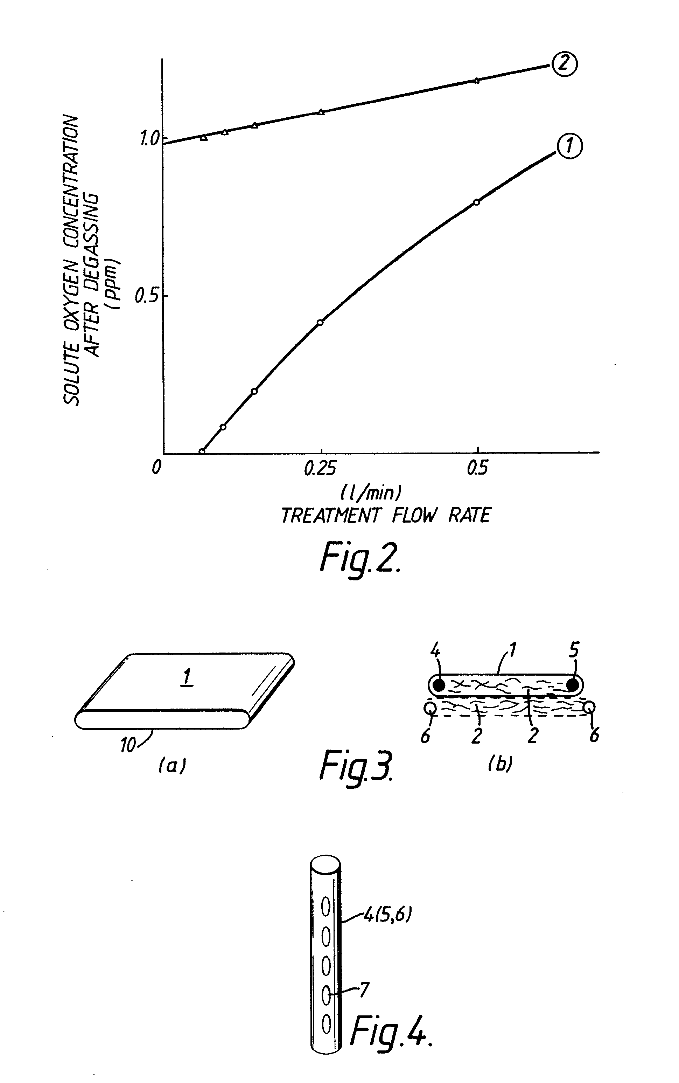

In the present example the film material (1) and the spacer (2) are assembled by the method illustrated in Figure 3. Specifically, a continuous loop (10) is formed with the film material (1), and spacers (2,2) are installed both inside and outside said loop. A liquid supply port (4), a liquid discharge port (5) and gas discharge ports (6,6), each comprising a pipe formed with longitudinally oriented holes (7) in its wall as shown in Figure 4, are installed at the ends of this assembly and the assembly is then rolled up in the form of a spiral and inserted into a cylindrical housing (8) as shown in Figure 1. Note that in Figure 1, the thick layers both consist of the spacer material (2), the film material (1) being indicated by the solid line separating the thick layers.

The liquid supply port (4) is installed at one end of one of the spaces (3a) formed by the spacers (2) as described above, while the liquid discharge port (5) is installed at the other end of said space (3a). Similarly, the gas discharge ports (6,6), which are connected to a vacuum pump and a vacuum tank, are respectively installed at opposite ends of the space (3) (in positions along a radial line) on the other side of the film material (1) from the space (3a). As a result of this arrangement, the space (3) is placed under reduced pressure. The top of the housing (8) is sealed by means of a closure device, such as a lid.

Any reinforcing material with a net-form structure or other porous structure may be used for the spacers (2). However, from the standpoint of promoting the diffusion of solute oxygen molecules contained in the liquid being treated, it is desirable to use a material which has a complicated surface form and a structure that tends to generate turbulent flow in the liquid. It is advantageous if the thickness of said spacer material is small; for example, a material such as a non-woven fabric (installed on one or both surfaces of the porous film (1)) may be very appropriate.

In a device in accordance with the present invention, the material and size of the film material (1) used for degassing can be freely selected. Even in cases where the film material (1) is thin, said material (1) can be made to withstand high-pressure conditions by laminating a reinforcing fabric with said material. Furthermore, the flow path can be freely designed by appropriate selection of the spacers, and the flow conditions and degree of pressure loss can be freely chosen by selection of the structure of the spacers. Accordingly, the device can be used to treat even high-viscosity liquids, and it is clear that a high degassing rate can be obtained by means of the film-form material (whose manufacturing cost per unit area is lower than that of a tube-form material). Furthermore, as a result of the use of such a material, the overall device can be made more compact, manufacture can be automated, and the quantities of raw materials required can be reduced. Thus, a considerable reduction in cost can be achieved.

Figure 2 shows the results of solute oxygen separation performance measured using a device in accordance with the present invention (constructed as described above) and a conventional tube type system with the same degassing film area, porosity and porous structure. Specifically, the device in accordance with the invention used a continuously porous polytetrafluoroethylene film material (1) with a thickness of 50 microns, and net-form separators (2) with a thickness of 2 mm. Using these materials, a degassing apparatus was constructed in which a spiral flow path with a length of 5 m was formed. the film surface area of the degassing apparatus so formed was 1.5 m², and the volume of the apparatus was approximately 6600 cm³.

On the other hand, the conventional device used continuously porous tubes made of polytetrafluoroethylene (internal diameter: 2 mm, film thickness, 0.7 mm). Specifically, a device with a tube surface area of 1.5 m² (the same surface area as the device constructed in accordance with the invention) was constructed using 48 such tubes (each with a length of 5 m). This conventional apparatus had a volume of 9900 cm², and was thus approximately 50% larger than the device in accordance with the invention.

The results obtained when these two devices were operated in the treatment of water with a solute oxygen concentration of 8.1 ppm (temperature: 25° C), and a vacuum of 20 Torr connected to the gas discharge ports, are shown in Figure 2. The plot 1 was obtained using the device in accordance with the invention, and exhibits a degassing effect considerably higher than that shown by the plot 2 which was obtained using the conventional device, particularly at flow rates of 0.25 litres/min. or less, confirming that the device of the present invention is superior in terms of degassing efficiency.

In the device in accordance with the present invention, which uses spacers (2) consisting of a net-form material, or the like, turbulent flow is created in the liquid flowing through the flow path space (3a) (which is formed in the shape of a spiral coil). Furthermore, the distance from the centre of the liquid flow to the polytetrafluoroethylene film can be made very small without any conspicuous increase in pressure loss. As a result of these features, the degassing efficiency can be greatly improved as described above.

Furthermore, in regard to the manufacturing cost of the apparatus, the continuously porous tubes used in conventional devices are expensive. It was confirmed that in the case of the devices which were used to produce the results shown in Figure 2, the device in accordance with the present invention cost only about 1/20th as much as the conventional device.

Thus, with the present invention, a degassing device can be made which can be used even with high-viscosity liquids and which can be manufactured easily and at low cost using a film material consisting of a simple sheetform resin film with a continuously porous structure. Furthermore, an efficient degassing treatment can be performed using the device, producing desirable degassing results. At the same time, the device can be made compact, and degassing can be achieved economically and advantageously in all cases. Accordingly, the present invention has considerable industrial merit.

## Claims

1. A degassing device comprising a liquid impermeable gas-permeable film material (1) and spacer means (2) which are disposed alternately in spiral coils within a housing (8), the spacer means (2) on one side of the film material (1) defining a liquid flow path (3a), and the spacer means (2) on the other side of the film material (1) defining a passage (3) for gas removed from the liquid.

2. A degassing device according to claim 1, in which the spiral coils are formed by winding in a roll a closed loop (10) of the film material (1) which has spacer means (2) disposed both inside and outside the loop.

3. A degassing device according to claim 1 or claim 2, in which the spacer means (2) comprises a net-like material or a non-woven fabric.

4. A degassing device according to claim 3, in which the spacer means (2) is made of polypropylene, polyvinyl chloride, or polytetrafluoroethylene.

5. A degassing device according to any one of the preceding claims, in which the film material (1) is of polytetrafluoroethylene.

6. A degassing device according to any one of the preceding claims, in which perforated pipes (7) forming liquid inlet and outlet ports (4,5) are disposed at the radially inner and outer ends of the spiral coil formed by the spacer means (2) defining the liquid flow path 3a), and perforated pipes (7) forming gas discharge ports (6) are disposed at the radially inner and outer ends of the spiral coil formed by the spacer means (2) defining the gas removal passage (3).

*Fig.1.*

EP 0 354 797 A2

Fig.2.

Fig.3.

Fig.4.